# FASCICULE DE BREVET EUROPEEN

(11) **EP 1 640 217 B1**
(45) Date de publication et mention de la délivrance du brevet: **14.02.2007**
(21) Numéro de dépôt: 05300617.7
(22) Date de dépôt: 25.07.2005
(51) Int. Cl.: B60R 19/24, B62D 21/15

(54) **Support pour un pare-chocs arrière d'un véhicule automobile**
Hinterer Stossfängerhalter für ein Kraftfahrzeug
Rear bumper support for motor vehicle

(30) Priorité: 28.09.2004 FR 0410258
(43) Date de publication de la demande: 29.03.2006
(73) Titulaire: Peugeot Citroen Automobiles SA, 78943 Vélizy-Villacoublay Cedex (FR)
(72) Inventeur: LAMOTTE, Philippe, 94260, FRESNES (FR)
(74) Mandataire: Ménès, Catherine

(56) Documents cités:
- EP-A- 0 249 518
- EP-A- 0 256 174
- US-A- 5 114 198

## Description

L'invention concerne un support pour un pare-chocs arrière d'un véhicule automobile.

L'architecture du coffre d'un véhicule automobile de type break nécessite une large ouverture et un seuil le plus bas possible afin de faciliter le chargement du véhicule avec des objets lourds et/ou longs. Dans certains véhicules, le plancher du coffre se trouve sensiblement au même niveau que la face supérieure du pare-chocs arrière du véhicule. Il en résulte que, lorsque le client charge le coffre du véhicule, il dépose les objets à charger sur le seuil du coffre et ainsi aussi sur le pare-chocs. Dans cette situation, le pare-chocs doit pouvoir supporter des charges importantes verticales qui peuvent atteindre, dans la partie centrale du pare-chocs, un ordre de grandeur d'une centaine de kilogrammes.

La publication EP 0 249 518 décrit un support pour un pare-chocs arrière d'un véhicule automobile selon le préambule de la revendication 1.

Habituellement, un pare-chocs arrière d'un véhicule est fixé sur la carrosserie du véhicule, ou éventuellement sur le châssis de ce dernier, à l'aide de deux éléments de fixation disposés de part et d'autre du véhicule. Un tel montage du pare-chocs arrière ne permet cependant pas de supporter des charges importantes verticales demandées.

Une première solution permettant de renforcer la partie arrière du véhicule automobile de manière telle que le pare-chocs puisse supporter les charges importantes demandées, consisterait à souder une équerre à la partie arrière du châssis. Cette équerre doit alors avoir une largeur correspondant à peu près à la distance entre les deux éléments de fixation du pare-chocs, voire même à la largeur du véhicule.

Toutefois, cette première solution présente au moins deux inconvénients. Le premier en est le poids de l'équerre, puisqu'elle serait réalisée en métal, notamment en acier. L'utilisation d'une équerre métallique serait alors en contradiction avec les efforts généralement faits pour alléger les véhicules automobiles.

L'autre inconvénient de l'utilisation d'une équerre métallique résulte du fait que l'équerre doit être soudée sur la partie arrière du châssis. Cette solution nécessite donc l'installation d'un poste de soudage supplémentaire sur la chaîne de fabrication des véhicules automobiles.

Le but de l'invention est de proposer une solution permettant de pallier les inconvénients énoncés plus haut.

Le but de l'invention est atteint avec un support pour un pare-chocs arrière d'un véhicule automobile qui comprend deux éléments de fixation permettant de fixer le pare-chocs sur une partie arrière d'un châssis de véhicule automobile, ce support comprenant en outre une traverse avec deux extrémités opposées. La traverse est destinée à être disposée sur les éléments de fixation du pare-chocs de manière à former, au moins entre les deux éléments de fixation, une structure d'appui apte à résister à des charges importantes verticales.

Avantageusement, la traverse est constituée par un profilé massif ou par un élément allongé alvéolaire, et réalisé en une matière plastique.

Plus particulièrement, la traverse peut être réalisée en une matière thermodurcissable répondant à la réglementation en vigueur, et aux normes en élaboration, sur la valorisation et le recyclage des véhicules hors d'usage et des composants et matériaux mis au rebut de véhicules réparées.

Selon une autre caractéristique de l'invention, la traverse est conformée aux deux extrémités pour pouvoir être montée à l'aide des deux éléments de fixation du pare-chocs. A cet effet, au vue d'un premier mode de montage, la traverse est conformée aux deux extrémités pour pouvoir être traversée par les deux éléments de fixation du pare-chocs. Et au vue d'un second mode de montage, la traverse est conformée aux deux extrémités pour pouvoir être montée par appui sur les deux éléments de fixation du pare-chocs.

De manière générale, la traverse comprend un corps allongé dont la longueur correspond sensiblement à la distance entre les deux éléments de fixation du pare-chocs. A chacune des deux extrémités, un moyen de pose permet de faire reposer la traverse sur les éléments de fixation du pare-chocs. Ces moyens de pose peuvent être des éléments rapportés au corps de la traverse. Toutefois, il est préférable de réaliser le corps allongé de la traverse et les moyens de pose en une seule pièce.

Les dimensions de la traverse sont avantageusement choisies de manière que le pare-chocs, lorsqu'il est monté sur le véhicule automobile, recouvre au moins la plus grande partie de la traverse.

Selon une caractéristique particulière de l'invention, la traverse est conformée pour permettre à la partie supérieure du pare-chocs, lorsque ce dernier est monté sur le véhicule automobile, de prendre constamment appui sur la traverse.

D'autres caractéristiques et avantages de l'invention ressortiront de la description ci-après d'un mode de réalisation du support selon l'invention. La description est faite en référence aux dessins dans lesquels :
- la figure 1 montre un support selon l'invention, monté sur la partie arrière d'un véhicule automobile ;
- la figure 2 montre un premier type d'une traverse du support de la figure 1 ; et
- la figure 3 montre un second type d'une traverse du support de la figure 1.

Habituellement, un pare-chocs arrière d'un véhicule automobile est fixé sur une partie arrière d'un châssis 1 du véhicule automobile moyennant deux éléments de fixation 2, 3 solidaires du châssis du véhicule automobile.

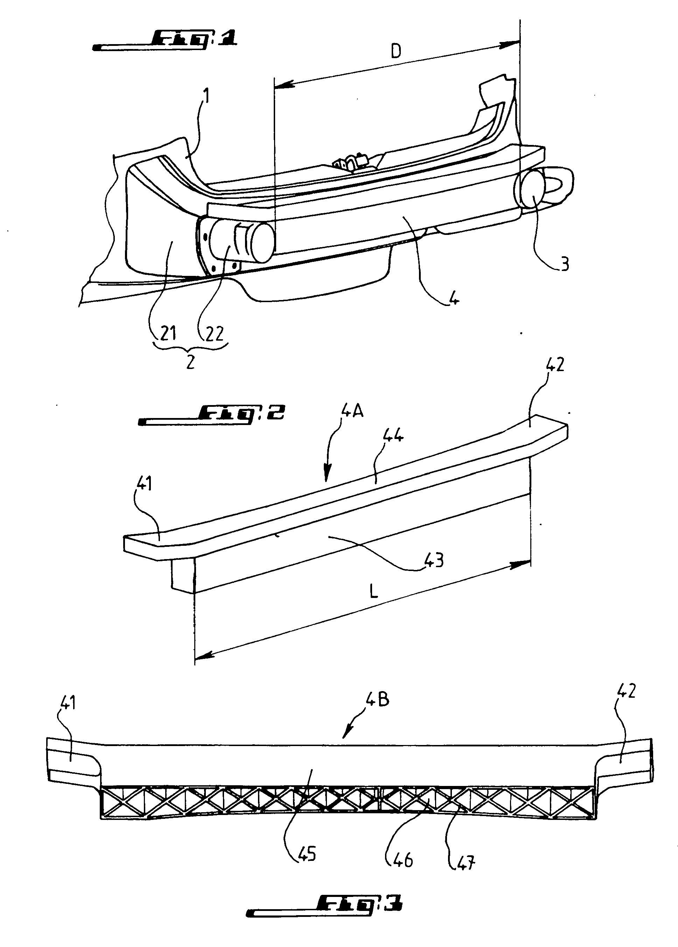

Selon l'exemple de réalisation représenté sur la figure 1, chacun des éléments de fixation 2, 3 comprend un socle et un bras. Pour l'élément de fixation 2, le socle est référencé 21 et le bras est référencé 22.

Le support de l'invention comprend par ailleurs une traverse 4 avec deux extrémités opposées 41, 42. Grâce à la forme et aux dimensions choisies de la traverse, cette dernière est disposée sur les éléments de fixation 2, 3 du pare-chocs de manière à former une structure d'appui apte à résister à des charges importantes verticales.

En ce qui concerne la forme et les dimensions de la traverse 4, le principe suivant a été retenu. La traverse 4 est conformée de manière à pouvoir être fixée au véhicule seulement à l'aide des deux éléments de fixation 2, 3 du pare-chocs. A cet effet, la traverse 4 est conformée aux deux extrémités 41, 42 de manière à pouvoir reposer sur les deux éléments de fixation 2, 3 du pare-chocs. En d'autres termes, la traverse 4 est conformée pour pouvoir être posée, et non pas fixée, sur les deux éléments de fixation 2, 3 du pare-chocs. Ainsi, la traverse 4 est maintenue en position, en statique, par son propre poids. Et en dynamique, la traverse 4 est maintenue en position par la partie supérieure du pare-chocs qui, lorsque le pare-chocs est monté sur le véhicule, recouvre au moins la plus grande partie de la traverse 4. Avantageusement, la traverse 4 est conformée pour permettre au pare-chocs, lorsqu'il est monté sur le véhicule automobile, de prendre appui, avec sa partie supérieure, sur la traverse 4. On évite par cette disposition que la partie supérieure du pare-chocs se déforme d'abord, aussi faible que cette déformation soit, avant que la traverse ne produise son effet.

Le support selon l'invention présente donc au moins trois avantages par rapport à la première solution indiquée plus haut (équerre soudée). Le premier avantage est obtenu par le fait que le support utilise les deux éléments de fixation déjà existants pour la fixation du pare-chocs. Il n'est donc pas nécessaire de prévoir des éléments supplémentaires de fixation ni des outils supplémentaires pour leur montage. De plus, la conception de l'invention fait que le support n'a pas besoin d'être fixé, car il suffit de poser la traverse sur les deux éléments de fixation 2, 3 du pare-chocs.

Le deuxième avantage résulte de la forme de la traverse. La face supérieure de la traverse constitue une structure d'appui pour la partie supérieure du pare-chocs. Cette disposition évite sensiblement toute déformation de la face supérieure du pare-chocs lorsqu'une charge importante verticale y prend appui.

Et le troisième avantage est celui d'une pièce rapportée, facile à changer en cas de réparation suite à un choc arrière ne déformant pas la structure du véhicule.

Pour obtenir les avantages énoncés ci-avant du support de l'invention, la traverse 4 comprend un corps allongé 43 dont la longueur L correspond sensiblement à la distance D entre les deux éléments de fixation 2, 3 du pare-chocs. La distance D est mesurée entre les faces en regard respectivement du bras 22 de l'élément de fixation 2 et du bras correspondant de l'élément de fixation 3.

Afin que la traverse 4 puisse prendre appui sur les deux éléments de fixation 2, 3, la traverse 4 comprend, outre le corps allongé 43, à chacune de ses deux extrémités, un moyen de pose ayant la forme d'un crochet ou d'un élément plat prolongeant le corps 43 au-delà de ses deux extrémités dans le sens de sa longueur.

De préférence, pour bénéficier pleinement des avantages du support selon la présente invention, la traverse 4 est réalisée en une seule pièce. Ainsi, le corps allongé 43 et les deux moyen de pose prolongeant ce dernier et formant en même temps les extrémités 41, 42 de la traverse, sont une seule pièce, obtenue par moulage par injection. Grâce à cette disposition de l'invention, la traverse est caractérisée par une plus grande stabilité, comparée à une traverse pourvue de moyens de pose rapportés. De plus, la traverse étant réalisée en une matière plastique, notamment en une matière thermodurcissable, les coûts de sa fabrication sont moins élevés lorsqu'elle est fabriquée en une seule opération que s'il s'agissait d'une traverse ayant des pièces rapportées.

Par ailleurs, lorsque l'ensemble formé par la traverse 4, le pare-chocs et les éléments de fixation 2, 3 est conformé pour assurer que la partie supérieure du pare-chocs s'appuie constamment sur la traverse 4, il est suffisant de déterminer les matières plastiques de la traverse et du pare-chocs ainsi que leurs dimensions, de façon que la traverse et la partie supérieure du pare-chocs résistent ensemble aux charges verticales en question. Il en résulte une traverse moins chère en fabrication et moins lourde, comparé à une traverse censée résister seule aux charges verticales en question.

Les figures 2 et 3 montrent deux traverses différentes, référencées respectivement 4A et 4B, du support de l'invention.

La première traverse 4A, représentée sur la figure 2, est une pièce massive en matière plastique. Elle a la forme d'un élément allongé de longueur L avec deux extrémités opposées 41, 42. Cet élément comprend un corps 43 à section transversale rectangulaire surmonté d'une partie plate 44. La partie 44 s'étend sur toute la longueur du corps 43 et est prolongée au-delà du corps 43 par des parties plates constituant à la fois respectivement l'extrémité 41 et l'extrémité 42 de la traverse et le moyen correspondant de pose. De plus, la partie plate 44 est plus large que le corps 43, de manière que la traverse 4A présente, presque sur la longueur entière, une section transversale en T.

Grâce à cette disposition de l'invention, la traverse 4A est montée sur le véhicule en la faisant reposer, par les moyens de pose 41 42, sur les moyens de fixation 2, 3 du pare-chocs. En même temps, la longueur L du corps 43 de la traverse 4A est choisie comme correspondant approximativement à la distance D entre les deux éléments de fixation 2, 3 pour éviter tout déplacement longitudinal de la traverse 4A pendant le déplacement du véhicule.

Il est rappelé ici à toutes fins utiles, que la direction longitudinale de la traverse 4A correspond, lorsque la traverse 4A est mise en place, à une direction transversale par rapport à la direction de déplacement avant ou arrière du véhicule.

Elle présente, comme déjà indiqué, une section transversale en forme de T. Selon cette notion, le corps 43 constitue l'âme du profilé en T et la partie 44 la partie transversale.

Par opposition à la première traverse 4A, la seconde traverse 4B, représentée sur la figure 3, est un élément monolithique creux avec une structure alvéolaire. La traverse 4B comprend un corps allongé 45 ayant une section transversale rectangulaire. Le corps 45 est prolongé, dans le sens de son étendue longitudinale, par deux moyens de pose 41, 42 constituant en même temps les extrémités opposées de la traverse 4B. Les moyens de pose 41, 42 sont disposés de manière à prolonger le corps 45 au niveau de sa face supérieure uniquement. Ainsi, la traverse 4B présente, selon une vue transversale, approximativement la même forme que la traverse 4A et peut donc être posée à l'arrière du véhicule automobile de la même manière que la traverse 4A.

Le corps 45 de la traverse 4B étant creux, il tire sa stabilité, et notamment sa résistance à la flexion, de la structure alvéolaire obtenue par une disposition en treillis d'une pluralité de peaux internes du corps. Ainsi, le corps 45 de la traverse 4B comprend un grand nombre d'alvéoles 46 ouvertes vers la face inférieure de la traverse et séparées les unes des autres par des peaux 47. Selon la réalisation représentée sur la figure 3, les peaux 47 s'étendent dans des plans verticaux, par rapport à la position de montage de la traverse 4B, et s'entrecoupent de manière à délimiter des alvéoles 46 adjacentes les unes des autres. Selon la disposition représentée des peaux 47, les alvéoles 46 correspondent sensiblement à des cylindres à base triangulaire ou à base de losange. Toutefois, toute autre disposition est possible sans sortir du principe de la présente invention. La structure alvéolaire de la traverse 4B apporte, notamment par rapport à la réalisation sous la forme d'une pièce massive comme la traverse 4A, l'avantage d'un poids relativement plus faible pour une résistance au moins aussi grande, ce qui facilite sa manipulation lors de sa pose et ne va pas à l'encontre des efforts d'allègement des véhicules.

## Revendications

1. Support pour un pare-chocs arrière d'un véhicule automobile, avec deux éléments de fixation (2, 3) permettant de fixer le pare-chocs sur une partie arrière d'un châssis (1) du véhicule automobile,
**caractérisé en ce qu**'il comprend en outre une traverse (4) avec deux extrémités (41, 42) opposées, la traverse (4) étant conformée pour être disposée sur les éléments de fixation (2, 3) du pare-chocs de manière à former, au moins entre les deux éléments de fixation (2, 3), une structure d'appui apte à résister à des charges importantes verticales.

2. Support selon la revendication 1, **caractérisé en ce que** la traverse (4) est constituée par un profilé massif réalisé en une matière plastique.

3. Support selon la revendication 1, **caractérisé en ce que** la traverse (4) est constituée par un élément allongé alvéolaire réalisé en une matière plastique.

4. Support selon l'une quelconque des revendications 1 à 3, **caractérisé en ce que** la traverse (4) est réalisée en une matière thermodurcissable.

5. Support selon l'une quelconque des revendications 1 à 4, **caractérisé en ce que** la traverse (4) est conformée aux deux extrémités (41, 42) pour pouvoir être fixée au véhicule automobile à l'aide des deux éléments de fixation (2, 3) du pare-chocs.

6. Support selon l'une quelconque des revendications 1 à 5, **caractérisé en ce que** la traverse (4) est conformée aux deux extrémités (41, 42) pour pouvoir être montée par appui sur les deux éléments de fixation (2, 3) du pare-chocs.

7. Support selon l'une quelconque des revendications 1 à 6, **caractérisé en ce que** la traverse (4) comprend un corps allongé (43) ayant une longueur (L) qui correspond sensiblement à une distance (D) entre les deux éléments de fixation (2, 3) du pare-chocs, et, à chacune des deux extrémités, un moyen de pose (41, 42) permettant de faire reposer la traverse (4) sur les éléments de fixation (2, 3) du pare-chocs.

8. Support selon l'une quelconque des revendications 1 à 7, **caractérisé en ce que** les dimensions de la traverse (4) sont choisies de manière que le pare-chocs, lorsqu'il est monté sur le véhicule automobile, recouvre au moins la plus grande partie de la traverse (4).

9. Support selon l'une quelconque des revendications 1 à 8, **caractérisé en ce que** la traverse (4) est conformée pour permettre au pare-chocs, lorsqu'il est monté sur le véhicule automobile, de prendre appui sur la traverse (4).

## Claims

1. Support for a rear bumper of a motor vehicle, with two fastening elements (2, 3) allowing the bumper to be fixed to a rear portion of a chassis frame (1) of the motor vehicle,
**characterised in that** it further comprises a cross-piece (4) with two opposite ends (41, 42), the cross-piece (4) being shaped so as to be placed on the fastening elements (2, 3) of the bumper so as to form, at least between the two fastening elements (2, 3), a support structure capable of withstanding substantial vertical loads.

2. Support according to Claim 1, **characterised in that** the cross-piece (4) is constituted by a solid profile made out of a plastic material.

3. Support according to Claim 1, **characterised in that** the cross-piece (4) is constituted by an elongated cellular element made out of a plastic material.

4. Support according to any one of Claims 1 to 3, **characterised in that** the cross-piece (4) is made out of a thermosetting material.

5. Support according to any one of Claims 1 to 4, **characterised in that** the cross-piece (4) is shaped at the two ends (41, 42) so that it can be fixed to the motor vehicle using the two fastening elements (2, 3) of the bumper.

6. Support according to any one of Claims 1 to 5, **characterised in that** the cross-piece (4) is shaped at the two ends (41, 42) so that it can be mounted by bearing on the two fastening elements (2, 3) of the bumper.

7. Support according to any one of Claims 1 to 6, **characterised in that** the cross-piece (4) comprises an elongated body (43) having a length (L) that corresponds substantial to a distance (D) between the two fastening elements (2, 3) of the bumper and, at each of the two ends, a fitting means (41, 42) making it possible to rest the cross-piece (4) on the fastening elements (2, 3) of the bumper.

8. Support according to any one of Claims 1 to 7, **characterised in that** the dimensions of the cross-piece (4) are chosen so that when the bumper is mounted on the motor vehicle, it covers at least the greater part of the cross-piece (4).

9. Support according to any one of Claims 1 to 8, **characterised in that** the cross-piece (4) is shaped so as to allow the bumper, when it is mounted on the motor vehicle, to bear on the cross-piece (4).

## Patentansprüche

1. Halter für einen hinteren Stoßfänger eines Kraftfahrzeugs mit zwei Befestigungselementen (2, 3), die es ermöglichen, den Stoßfänger an einem hinteren Abschnitt eines Rahmens (1) des Kraftfahrzeugs zu befestigen, **dadurch gekennzeichnet, dass** er darüber hinaus einen Querträger (4) mit zwei gegenüberliegenden Enden (41, 42) aufweist, wobei der Querträger (4) so ausgebildet ist, dass er auf den Befestigungselementen (2, 3) des Stoßfängers derart angeordnet wird, dass er zumindest zwischen den beiden Befestigungselementen (2, 3) eine Stützkonstruktion bildet, die hohen vertikalen Lasten standhält.

2. Halter nach Anspruch 1, **dadurch gekennzeichnet, dass** der Querträger (4) von einem massiven Profil aus Kunststoff gebildet wird.

3. Halter nach Anspruch 1, **dadurch gekennzeichnet, dass** der Querträger (4) von einem wabenförmigen länglichen Element aus Kunststoff gebildet wird.

4. Halter nach einem der Ansprüche 1 bis 3, **dadurch gekennzeichnet, dass** der Querträger (4) aus Duroplast besteht.

5. Halter nach einem der Ansprüche 1 bis 4, **dadurch gekennzeichnet, dass** der Querträger (4) an den beiden Enden (41, 42) so ausgebildet ist, dass er mithilfe der beiden Befestigungselemente (2, 3) des Stoßfängers am Kraftfahrzeug befestigt werden kann.

6. Halter nach einem der Ansprüche 1 bis 5, **dadurch gekennzeichnet, dass** der Querträger (4) an den beiden Enden (41, 42) so ausgebildet ist, dass er durch Aufliegen auf den beiden Befestigungselementen (2, 3) des Stoßfängers montiert werden kann.

7. Halter nach einem der Ansprüche 1 bis 6, **dadurch gekennzeichnet, dass** der Querträger (4) einen länglichen Körper (43) mit einer Länge (L), die im Wesentlichen einem Abstand (D) zwischen den beiden Befestigungselementen (2, 3) des Stoßfängers entspricht, und an jedem der beiden Enden ein Montagemittel (41, 42) umfasst, das es ermöglicht, den Querträger (4) auf den Befestigungselementen (2, 3) des Stoßfängers ruhen zu lassen.

8. Halter nach einem der Ansprüche 1 bis 7, **dadurch gekennzeichnet, dass** die Abmessungen des Querträgers (4) so gewählt sind, dass der Stoßfänger, wenn er am Kraftfahrzeug montiert ist, zumindest den größten Teil des Querträgers (4) bedeckt.

9. Halter nach einem der Ansprüche 1 bis 8, **dadurch gekennzeichnet, dass** der Querträger (4) so ausgebildet ist, dass er es dem Stoßfänger, wenn er am Kraftfahrzeug montiert ist, ermöglicht, auf dem Querträger (4) aufzuliegen.
